# EUROPÄISCHE PATENTANMELDUNG

(11) **EP 3 460 236 A1**
(43) Veröffentlichungstag der Anmeldung: **27.03.2019**
(21) Anmeldenummer: 18196204.4
(22) Anmeldetag: 24.09.2018
(51) Int. Cl.: F03D 17/00, F16H 57/025, F03D 15/00

(54) **VORRICHTUNG ZUR MESSUNG VON MOMENTEN EINER WINDENERGIEANLAGE, VERFAHREN ZUM BETREIBEN EINER WINDENERGIEANLAGE SOWIE WINDENERGIEANLAGE**

(30) Priorität: 25.09.2017 DE 102017008938
(71) Anmelder: Senvion GmbH, 22297 Hamburg (DE)
(72) Erfinder: WARFEN, Karsten, 23795 Weede/Söhren (DE); HOPP, Eckart, 24790 Schülldorf (DE)
(74) Vertreter: Hahner, Ralph

(57) **Zusammenfassung**

Die Erfindung betrifft eine Vorrichtung zur Messung von Momenten einer Windenergieanlage, umfassend einen Tragbolzen (30), welcher mit einem Maschinenträger (20) eines auf einem Turm angeordneten azimutverstellbaren Maschinenhauses der Windenergieanlage fest verbunden oder verbindbar ist, wobei eine Drehmomentenstütze (10) eines Getriebes der Windenergieanlage über wenigstens einen Elastomerkörper (16) auf dem Tragbolzen (30) lagerbar oder gelagert ist, ein Verfahren zum Betreiben einer Windenergieanlage und eine entsprechende Windenergieanlage.

Erfindungsgemäß ist der Tragbolzen (30) mit einem oder mehreren Sensoren (46 - 49; 66) versehen, welche zur Detektion von Dehnungen und/oder Scherungen des Tragbolzens (30) ausgebildet und angeordnet sind, wobei eine Signalverarbeitungs- und/oder Auswerteeinheit (54) vorhanden ist, welche mit dem oder den Sensoren verbunden ist und ausgebildet ist, im Betrieb der Windenergieanlage aus Messsignalen der Sensoren (46 - 49; 66) Nick- und/oder Giermomente zu ermitteln, die auf die Drehmomentenstütze (10) wirken.

## Beschreibung

Die Erfindung betrifft eine Vorrichtung zur Messung von Momenten einer Windenergieanlage, umfassend einen Tragbolzen, welcher mit einem Maschinenträger eines auf einem Turm angeordneten azimutverstellbaren Maschinenhauses der Windenergieanlage fest verbunden oder verbindbar ist, wobei eine Drehmomentenstütze eines Getriebes der Windenergieanlage über wenigstens einen Elastomerkörper auf dem Tragbolzen lagerbar oder gelagert ist, sowie eine Windenergieanlage und ein Verfahren zum Betreiben einer Windenergieanlage.

Die vorliegende Erfindung betrifft das Gebiet der Messung von Momenten einer Windenergieanlage, besonders die Messung von Torsionsmomenten, Nickmomenten und Yaw- (bzw. Gier-)Momenten. Diese treten im Betrieb der Windenergieanlage ständig auf und insbesondere beim Lastfall zum Blattdurchgang am Turm. Da moderne Rotorblätter häufig in ihrer Steifigkeit für den Lastfall des Blattdurchgangs am Turm dimensioniert sind, ist diese Messung der Momenten bei Windenergieanlagen inzwischen weit verbreitet. Diese Momentenmessungen dienen auch häufig als Input für die Anlagensteuerung, etwa zur Lastenreduktion, zur Erkennung horizontaler und vertikaler Scherungen oder zur Unterstützung der Azimutsteuerung unter anderem.

Bekannt ist bislang unter anderem die Messung von Kräften über Materialdehnung in den Blattwurzeln. Diese Messung verursacht hohe Kosten. Außerdem sind die Eigenschaften der glasfaserverstärkten Kunststoffe komplex, so dass die Auswertung der Messergebnisse der Dehnungsmessstreifen an den Blattwurzeln nicht trivial ist.

Auch die Messung von Dehnungen an der langsamen Welle mittels Dehnungsmessstreifen ist bekannt. Bei der Messung von Dehnungen an der langsamen Welle ist die Applikation der Dehnungsmessstreifen aufwendig, so dass die Montageanforderungen erhöht sind.

Alternative Methoden beinhalten auch die Messung von Abständen zum Nabenanschluss der langsamen Welle sowie die Messung der Elastomer-Bewegung an den Getriebedrehmomentenstützen. Die Abstandsmessung am Nabenanschluss ist aufgrund axialer Lose und weiterer Effekte kritisch, während bei der Messung der Elastomer-Bewegungen an den Getriebedrehmomentenstützen die Problematik auftritt, dass diese eine komplexe Übertragungsfunktion aufweisen und die Elastomer-Eigenschaften streuen und eine hohe Temperaturabhängigkeit aufweisen.

Demgegenüber liegt der vorliegenden Erfindung die Aufgabe zugrunde, Momentenmessungen an oder in einer Windenergieanlage kostengünstig und zuverlässig zu machen.

Diese Aufgabe wird gelöst durch eine Vorrichtung zur Messung von Momenten einer Windenergieanlage, umfassend einen Tragbolzen, welcher mit einem Maschinenträger eines auf einem Turm angeordneten azimutverstellbaren Maschinenhauses der Windenergieanlage verbunden oder verbindbar ist, wobei eine Drehmomentenstütze eines Getriebes der Windenergieanlage auf dem Tragbolzen lagerbar oder gelagert ist, die dadurch weitergebildet ist, dass der Tragbolzen mit einem oder mehreren Sensoren versehen ist, welche zur Detektion von Dehnungen und/oder Scherungen des Tragbolzens ausgebildet und angeordnet sind, wobei eine Signalverarbeitungs- und/oder Auswerteeinheit vorhanden ist, welche mit dem oder den Sensoren verbunden ist und ausgebildet ist, im Betrieb der Windenergieanlage aus Messsignalen der Sensoren von Biegungen und/oder Scherungen des Tragbolzens Nickmomente und/oder Giermomente zu ermitteln, die auf die Drehmomentenstütze wirken.

Die Erfindung beruht auf dem Grundgedanken, dass Kräfte in einem oder beiden Tragbolzen der Drehmomentenstützen des Getriebes gemessen werden, und zwar in Form einer Messung von Biegungen und/oder Scherungen der Tragbolzen. Diese Tragbolzen werden auch als Pins oder Getriebepins bezeichnet. Die Messung der Biegung und Scherung der Pins bzw. Tragbolzen erfolgt vorzugsweise im Mikrometerbereich. Industrietaugliche Kraft- bzw. Biegungsmesssensoren sind verfügbar.

Im Rahmen der vorliegenden Patentanmeldung ist mit der Messung von Momenten die Messung von den Kräften umfasst, die durch die Momente verursacht werden, die als Reaktion des Systems auf das Windfeld entstehen, welches auf die Windenergieanlage einwirkt. Diese Momente und Kräfte werden indirekt gemessen, zumeist über Dehnungen von Bauteilen der Windenergieanlage, die aus Biegung oder Scherung resultieren, die ihrerseits durch Kräfte verursacht werden, die im Wesentlichen auf die Momente der Windenergieanlage zurückzuführen sind. Hierzu zählen das Nickmoment, das Giermoment und das Drehmoment. Das Drehmoment ist die Basis zur Energienutzung, die Nick- und Giermomente sind unvermeidbare Störeffekte.

Die Messung der Biegung und/oder Scherung des Tragbolzens oder der Tragbolzen der Drehmomentenstützen vereint mehrere Vorteile miteinander. Zum einen sind die Tragbolzen massive Metallteile, die üblicherweise zumindest abschnittsweise zylindrisch oder anderweitig regelmäßig ausgebildet sind und daher eine gut bekannte Übertragungsfunktion haben. Dies bedeutet, dass die Biegung und/oder Scherung des jeweiligen Tragbolzens eine direkte Antwort auf die jeweilige auf den Tragbolzen ausgeübte Kraft in Betrag und Richtung ist. Der Rückschluss auf die ausübende Kraft ist daher unkompliziert. Tragbolzen aus Stahl bieten auch eine hohe Wiederholgenauigkeit und eine vernachlässigbar geringe Temperaturabhängigkeit ihrer Biegung und/oder Scherung bzw. deren Messung.

Weiterhin ist der Tragbolzen in einer bevorzugten Ausführungsform mit dem Maschinenträger verbunden und bietet somit das Widerlager für das Getriebe. Der Tragbolzen ist üblicherweise gegenüber der Drehmomentenstütze oder dem Maschinenträger mittels Elastomerkörpern schwingungsdämpfend entkoppelt. Die auf das Getriebe wirkenden Kräfte, die insbesondere auf die momentanen Gier- und Nickmomente an der Windenergieanlage zurückgehen, können somit von den höherfrequenten Schwingungen des Getriebes selbst wenigstens teilweise entkoppelt gemessen werden. Die Elastomerkörper des Elastomerlagers wirken zwar dämpfend, jedoch wird in jedem Falle die Kraft, die von dem Getriebe auf den Maschinenträger übertragen wird, auf den bzw. die Tragbolzen ausgeübt. Daher ergibt sich bei der Messung der Biegung der Tragbolzen eine unverfälschte und direkte Messung der von außen wirkenden Momente. So kann über die Kräfte, die auf die Tragbolzen oder den Tragbolzen wirken, auf die Nickmomente und Giermomente der Windenergieanlage rückgeschlossen werden.

Gegenüber einer Sensorik an den Rotorblattwurzeln sind die Kosten gering. Gegenüber den zuvor genannten Alternativen ist auch die Montage einfach, so dass die Inbetriebnahme und die Reparatur der Windenergieanlage beschleunigt und verbilligt wird. In Bezug auf die Kalibrierung und die Überwachung dieser Messung bietet die erfindungsgemäße Vorrichtung den Vorteil, dass das Drehmoment der Windenergieanlage zur Kalibrierung und laufenden Plausibilisierung der Übertragungsfunktion im Betrieb verwendet werden kann. Die Übertragungsfunktion bedeutet in diesem Zusammenhang beispielsweise die Übertragung der gemessenen Verformung (ausgedrückt beispielsweise in Mikrometern) über eine Kraft (z.B. ausgedrückt in kN) zu einem Moment (beispielsweise ausgedrückt in kNm).

Falls die Messung in beiden Tragbolzen erfolgt, also in Triebstrangrichtung gesehen links und rechts des Getriebes, ist die Messung für Gleichtaktsignale von Nickmomenten und Giermomenten teilweise technisch redundant, so dass ebenfalls eine Plausibilisierung und Überprüfung stattfinden kann. So ist es auch möglich, etwa defekte Sensoren zu identifizieren.

Die Messung der Kombination aus Biegung und Scherung des Tragbolzens oder der Tragbolzen der Drehmomentenstütze weist den besonderen Vorteil auf, dass so eine besonders einfache Messanordnung ermöglicht wird, da die Sensoren im Wesentlichen in einer Ebene des Bolzens montiert werden können, und trotzdem Belastungen in zwei orthogonal aufeinander stehenden Ebenen, z.B. Gier- und Nickmoment, erfasst werden können. Hierdurch wird die Messanordnung erheblich vereinfacht.

In einer bevorzugten Alternative sind als Sensoren Dehnungsmessstreifen am Tragbolzen angebracht. Dehnungsmessstreifen sind robuste und bekannte Sensoren, die sich für die gewünschte Genauigkeit von Dehnungen im Bereich von Mikrometern gut eignen. Es handelt sich um elektrische Widerstände, deren elektrischer Widerstand sich mit der Längenausdehnung ändert, so dass der Widerstand ein Maß für die Längenänderung des Dehnungsmessstreifen selbst ist. Die Messungen mit Dehnungsmessstreifen eignen sich somit gut für elektrische bzw. elektronische Messungen. Die Dehnungsmessstreifen sind erfindungsgemäß an Stellen angebracht, an denen der bzw. die Tragbolzen im Betrieb die größten Dehnungen erfährt, die einen Rückschluss auf Nickmomente bzw. Giermomente erlauben. Die Dehnungsmessstreifen können vergossen geschützt innerhalb eines Sensors liegen, so dass sie die Lebensdauer der Windenergieanlage erreichen können.

In einer vorteilhaften Weiterbildung sind ein oder mehrere Dehnungsmessstreifen zur Messung von Biegungen des Tragbolzens in Längsrichtung des Tragbolzens ausgerichtet und/oder ein oder mehrere Dehnungsmessstreifen zur Messung von Scherungen des Tragbolzens unter einem Winkel von 30° bis 90°, insbesondere zwischen 40° und 50°, insbesondere 45°, zur Längsrichtung des Tragbolzens ausgerichtet. In Längsrichtung des Tragbolzens ausgerichtete Dehnungsmessstreifen erlauben Rückschlüsse auf eine Dehnung bzw. Biegung des Tragbolzens und sind integrativ für Kräfte, die in der durch den Sensor und die Bolzenlängsachse definierten Ebene auf den Bolzen wirken, während unter einem Winkel von 30° bis 90°, insbesondere 45°, zur Längsrichtung des Tragbolzens ausgerichtete Dehnungsmessstreifen auf Scherungen des Tragbolzens reagieren und besonders für Kräfte sensibel sind, die senkrecht zu der durch den Sensor und die Bolzenlängsachse definierten Ebene auf den Bolzen wirken.

Bei dem ausschließlichen Einsatz von längserstreckten Dehnungsmessstreifen sind diese an wenigstens drei verschiedenen Seiten, in Umfangsrichtung des Tragbolzens gesehen, anzuordnen, um zwischen Nickmomenten und Giermomente unterscheiden zu können. Aus Gründen der Redundanz sind vier verschiedene Seiten vorzuziehen. Beim gemischten Einsatz von Längserstreckung und quer angeordneten Dehnungsmessstreifen können die Dehnungsmessstreifen an einer oder, aus Gründen der Redundanz, zwei Seiten in Umfangsrichtung des Tragbolzens angeordnet sein.

Zwar lassen sich horizontale und vertikale Belastungen der Tragbolzen auch in der Weise messen, dass in Längsrichtung des Tragbolzens ausgerichtete Dehnungsmessstreifen einerseits an den horizontal gegenüber liegenden Seiten und andererseits an der Ober- und Unterseite des Tragbolzens angeordnet werden. Hiermit können aber keine Scherungen des Tragbolzens erfasst werden. Außerdem erfordert dies einen größeren Aufwand, da die doppelte Anzahl von Stellen am Tragbolzen mit Sensoren präpariert werden müssen als bei der Verwendung von längs- und schräggestellten Dehnungsmessstreifen, die paarweise in Einbaulage der fertig montierten Windenergieanlage horizontal links und rechts am Tragbolzen angeordnet sein können.

Wenn der Tragbolzen durch eine Lageröffnung der Drehmomentenstütze hindurchgeführt ist und mit jeweils einem von zwei Endabschnitten beidseitig aus der Lageröffnung hervorsteht, wobei Dehnungsmessstreifen symmetrisch zu einer zentralen Ebene der Lageröffnung an den beiden hervorstehenden Endabschnitten angeordnet sind, wobei insbesondere an jedem der beiden Endabschnitte Dehnungsmessstreifen an zueinander gegenüberliegenden Seiten des jeweiligen Endabschnitts angeordnet sind, so ist eine besonders präzise und redundante Messung der auf den Tragbolzen wirkenden Kräfte möglich.

So ist es in diesem Fall dann auch möglich, die jeweils vier gleichartigen Dehnungsmessstreifen messtechnisch zu einer Brückenschaltung im Sinne einer Wheatstone-Brücke zu verbinden und auf diese Weise aus den vier Einzelmessungen eine gemeinsame, sehr empfindliche, Messung für die Biegung oder Scherung bzw. die auf den Tragbolzen ausgeübte Kraft zu verwirklichen. Hierfür ist vorzugsweise vorgesehen, dass jeweils vier in Längserstreckung des Tragbolzens ausgerichtete Dehnungsmessstreifen und/oder jeweils vier unter einem Winkel von 30° bis 90° zur Längsrichtung des Tragbolzens ausgerichtete Dehnungsmessstreifen zu einer Brückenschaltung verschaltet sind.

In einer bevorzugten Weiterbildung ist vorgesehen, dass die Dehnungsmessstreifen in eine oder mehrere vorgefertigte rillenförmige Vertiefungen versenkt eingelassen sind, wobei die Vertiefung oder Vertiefungen insbesondere mit abnehmbaren, elektromagnetische Verschmutzung abschirmenden, vorzugsweise metallischen, Deckeln abdeckbar oder abgedeckt sind. Mit der Versenkung der Dehnungsmessstreifen in Vertiefungen und insbesondere der weiteren Abdeckung dieser Vertiefungen mit entsprechenden metallischen oder metallisierten Deckeln werden die elektronischen Komponenten und Kabel vor elektromagnetischen Verunreinigungen (EMV) geschützt, so dass die Messung nicht durch die elektromagnetisch verunreinigte Umgebung im Maschinenhaus der Windenergieanlage beeinträchtigt wird. Bei den benötigten Genauigkeiten der Messung ist eine elektromagnetische Abschirmung in dieser Weise vorteilhaft. Dazu ist ferner vorteilhaft vorgesehen, Kabelführungen der Sensoren am Tragbolzen in den Vertiefungen und/oder in Durchführungsbohrungen durch den Tragbolzen verlaufen zu lassen.

In einer Alternative zu rein metallischen Deckeln kann der Deckel auch in Kunststoff ausgebildet sein, der mit einer EMV-Schirmung versehen wird, z.B. durch Einguss eines Metallnetzes oder durch Bedampfen mit einer dünnen Metallschicht.

Ein mechanisch hoch beanspruchter Bereich ist derjenige, an dem die Tragbolzen die Drehmomentenstütze des Getriebes durchlaufen. Sie können dazu mittels eines Elastomerkörpers, beispielsweise einer zylindrischen Gummibuchse, von der Drehmomentenstütze oder vom Maschinenträger entkoppelt sein. Im Falle der Verwendung einer zylindrischen Gummibuchse am Ort des Durchgangs durch die Drehmomentenstütze ist der Tragbolzen mechanisch in eine Lageröffnung der Drehmomentenstütze unter hohem Druck eingepresst. In der umgekehrten Konfiguration, in der der Tragbolzen mittels Elastomerringen gegenüber dem Maschinenträger entkoppelt ist, ist der Tragbolzen direkt in einem Auge der Drehmomentenstütze eingepasst. Um in diesem Bereich des Durchgangs durch das Auge der Drehmomentenstütze die Verkabelung zu schützen und eine nachträgliche Verkabelung oder Reparatur der Verkabelung zu ermöglichen, ist vorzugsweise vorgesehen, in einem zentralen Teil des Tragbolzens, der in einem in der Drehmomentenstütze des Getriebes verbauten Zustand nicht zugänglich ist, ein Röhrchen als Kabeldurchführung in der Vertiefung einzusetzen. Dieses Röhrchen verhindert ein Eindringen des Elastomerkörpers in die Rinne und hält diese somit frei für das Ziehen und Verlegen von Kabeln.

Auch Verstärkerelektronik und gegebenenfalls eine Auswertungselektronik kann vorteilhaft in einer Versenkung oder mehreren Versenkungen des Tragbolzens angeordnet sein und entsprechend gegebenenfalls mittels eines Deckels elektromagnetisch abgeschirmt sein.

In einer ebenfalls vorteilhaften alternativen oder zusätzlichen Ausführungsform der Erfindung weist der Tragbolzen an wenigstens einer Seite eine Sensorbohrung in Längsrichtung des Tragbolzens auf, in dessen Inneren ein Sensorstab angeordnet ist, dessen Außendurchmesser kleiner ist als ein Innendurchmesser der Sensorbohrung, wobei der Sensorstab in einem Endabschnitt der Sensorbohrung, insbesondere lösbar, fixiert ist, wobei am Ausgang der Sensorbohrung ein Sensor angeordnet ist, der ausgebildet ist, Auslenkungen und/oder Auslenkungskräfte des dem fixierten Ende des Sensorstabes gegenüberliegenden Endes des Sensorstabes aufgrund von Verbiegungen und/oder Scherungen des Tragbolzens zu ermitteln. In diesem Fall wird ein Sensor axial zentriert in einer Bohrung in den jeweiligen Tragbolzen eingelassen, wobei die Elektronik vorzugsweise vor dem Tragbolzen sitzt, und der Biegeweg des Tragbolzens wird auf den Sensor mithilfe des Sensorstabes übertragen. Dieser ist an dem Ende, an dem die Bohrung endet, in der Bohrung fixiert und erfährt daher jede Bewegung und Biegung des Tragbolzens an dieser Stelle der Fixierung, und berührt im weiteren Verlauf der Bohrung bis zum Ausgang der Bohrung die Seitenwände der Bohrung nicht mehr, da sein Außendurchmesser kleiner ist als der Innendurchmesser der Bohrung. So wird der Biegeweg des Tragbolzens auf den Sensor übertragen. Die Bohrung für diese Biegewegabtastung geht nicht durch den gesamten Tragbolzen. Die Messung kann mechanisch durch Kontaktierung des freien Endes des Sensorstabes und durch Messung von dessen Auslenkung oder Auslenkungskraft erfolgen oder kontaktlos auf optischem, magnetischen oder anderem Wege.

Alternativ hierzu weist in einer ebenfalls vorteilhaften Ausführungsform der Tragbolzen an wenigstens einer Seite eine Sensorbohrung in Längsrichtung des Tragbolzens auf, in dessen Inneren ein Sensorstab angeordnet ist, dessen Außendurchmesser kleiner ist als ein Innendurchmesser der Sensorbohrung, wobei der Sensorstab in einem Endabschnitt der Sensorbohrung und am Ausgang der Sensorbohrung lösbar fixiert ist, wobei der Sensorstab mit wenigstens einem Sensor, insbesondere einem oder mehreren Dehnungsmessstreifen zur Messung von Biegungen und/oder Scherungen, versehen ist. In diesem Fall vollzieht der Sensorstab die Biegungen und Scherungen des Tragbolzens direkt mit, da er an seinen beiden Enden fix mit dem Tragbolzen verbunden ist. Da der Sensorstab selbst mit Sensoren, insbesondere Dehnungsmessstreifen, ausgestaltet ist, die Biegungen und Scherungen des Sensorstabs messen, wird damit auch die Biegung und Schilderung des Tragbolzens gemessen.

Beiden Ausführungsformen mit Sensorstab ist gemeinsam, dass der Sensorstab ohne Demontage des Drehmomentenlagers einfach zugänglich und austauschbar ist. In der zweiten Ausführungsform, in der der Sensorstab selbst mit Sensoren ausgestattet ist, können die Sensoren zusammen mit dem Sensorstab ausgetauscht werden. Da eine Demontage des Getriebes bzw. der Drehmomentenstütze nicht notwendig ist, sind die Stillstandszeiten für diese Maßnahme kurz. Der Austausch kann während der ohnehin angesetzten Wartungsarbeiten erfolgen.

Die der Erfindung zugrunde liegende Aufgabe wird auch durch eine Windenergieanlage mit einer zuvor beschriebenen erfindungsgemäßen Vorrichtung zur Messung von Momenten der Windenergieanlage gelöst, wobei die Windenergieanlage ein auf einem Turm angeordnetes azimutverstellbares Maschinenhaus mit einem Rotor mit im Wesentlichen horizontaler Rotorachse sowie einem vom Rotor angetriebenen oder antreibbaren Triebstrang mit einem Getriebe aufweist, welches über eine oder mehrere Drehmomentenstützen auf einem Maschinenträger des Maschinenhauses abgestützt ist. Durch die Aufnahme der erfindungsgemäßen Vorrichtung weist diese Windenergieanlage die gleichen Vorteile, Merkmale und Eigenschaften auf wie die erfindungsgemäße Vorrichtung.

Vorteilhafterweise ist das Getriebe an zwei gegenüberliegenden Seiten mittels jeweils einer Drehmomentenstütze auf dem Maschinenträger abgestützt, wobei jede der beiden Drehmomentenstützen mit einer entsprechenden zuvor beschriebenen erfindungsgemäßen Vorrichtung versehen ist, wobei die beiden Vorrichtungen eine gemeinsame Signalverarbeitungs- und/oder Auswerteeinheit aufweisen.

Die der Erfindung zugrunde liegende Aufgabe wird ferner durch ein Verfahren zum Betreiben einer Windenergieanlage mit einer zuvor beschriebenen erfindungsgemäßen Vorrichtung, umfassend einen Tragbolzen, welcher mit einem Maschinenträger eines auf einem Turm angeordneten azimutverstellbaren Maschinenhauses der Windenergieanlage fest verbunden oder verbindbar ist, gelöst, wobei eine Drehmomentenstütze eines Getriebes der Windenergieanlage über wenigstens einen Elastomerkörper auf dem Tragbolzen lagerbar oder gelagert ist, wobei das Verfahren dadurch weitergebildet ist, dass mittels des einen oder der mehreren Sensoren am oder im Tragbolzen Dehnungen und/oder Scherungen des Tragbolzens gemessen werden und mittels der Signalverarbeitungs- und/oder Auswerteeinheit, welche mit dem oder den Sensoren verbunden ist, im Betrieb der Windenergieanlage aus Messsignalen der Sensoren von Biegungen und/oder Scherungen des Tragbolzens Nick- und/oder Giermomente ermittelt werden, die auf die Drehmomentenstütze wirken.

Auch das Verfahren weist somit die gleichen Vorteile, Eigenschaften und Merkmale auf wie die erfindungsgemäße Vorrichtung und die erfindungsgemäße Windenergieanlage.

Vorzugsweise werden die aus den Messsignalen der Sensoren ermittelten Nickmomente und Giermomente, insbesondere zusätzlich auch Drehmomente, in eine Steuervorrichtung zur Pitchregelung eingespeist, insbesondere für eine Drehmomentenregelung der Windenergieanlage oder eine Einzelblattverstellung. Damit kann die Steuerung der Windenergieanlage schnell auf wechselnde Belastungen der Windenergieanlage reagieren und Maßnahmen einleiten, die diese Belastungen reduzieren.

Weitere Merkmale der Erfindung werden aus der Beschreibung erfindungsgemäßer Ausführungsformen zusammen mit den Ansprüchen und den beigefügten Zeichnungen ersichtlich. Erfindungsgemäße Ausführungsformen können einzelne Merkmale oder eine Kombination mehrerer Merkmale erfüllen.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1: eine perspektivische Darstellung einer bekannten Version einer Lagerung einer Drehmomentenstütze eines Getriebes im Maschinenhaus einer Windenergieanlage,
- Fig. 2: eine schematische perspektivische Darstellung eines Teils einer erfindungsgemäßen Vorrichtung in einer ersten Ausführungsform,
- Fig. 3: eine detaillierte Darstellung aus der Ausführungsform gemäß Figur 2,
- Fig. 4: eine schematische Darstellung eines Teils einer erfindungsgemäßen Vorrichtung in einer ersten Version einer zweiten Ausführungsform,
- Fig. 5: eine schematische Darstellung eines Teils einer erfindungsgemäßen Vorrichtung in einer zweiten Version der zweiten Ausführungsform,
- Fig. 6: eine schematische Darstellung eines Teils einer erfindungsgemäßen Vorrichtung in einer dritten Version der zweiten Ausführungsform und
- Fig. 7: eine aus dem Stand der Technik bekannte alternative Ausführung einer Drehmomentenstütze eines Getriebes einer Windenergieanlage.

In den Zeichnungen sind jeweils gleiche oder gleichartige Elemente und/oder Teile mit denselben Bezugsziffern versehen, so dass von einer erneuten Vorstellung jeweils abgesehen wird.

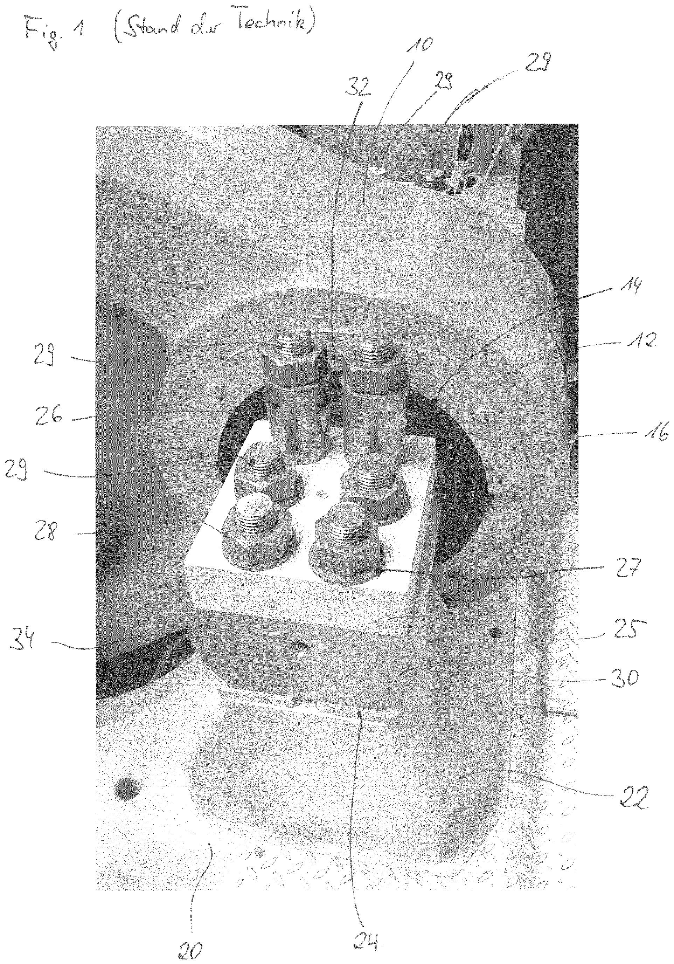

Fig. 1 zeigt eine perspektivische Darstellung einer bekannten Version einer Lagerung einer Drehmomentenstütze 10 eines Getriebes im Maschinenhaus einer Windenergieanlage mit im Wesentlichen horizontaler Rotorachse. Die Drehmomentenstütze 10, deren spiegelsymmetrisches Gegenstück auf der gegenüberliegenden Seite des nicht dargestellten Getriebes ebenfalls nicht dargestellt ist, weist einen Lagerring 12 mit einer Lageröffnung 14 auf. Diese Drehmomentenstütze ist einstückig mit dem Gehäuse des Getriebes ausgebildet. In der Lageröffnung 14 befinden sich konzentrisch von außen nach innen ein hohlzylindrischer Elastomerkörper 16 und darin ein Tragbolzen 30. Der hohlzylindrische Elastomerkörper 16 besteht in der dargestellten Ausführungsform aus einer konzentrischen Abfolge von Elastomerringen und zylindrischen Stahlrohrabschnitten, die etwas heller gegenüber dem dunkleren Elastomer kontrastieren.

Der Tragbolzen 30 ist im Grundsatz als solider Stahlzylinder ausgebildet, dessen aus der Lageröffnung 14 hervorstehende Endabschnitte, von denen ein Endabschnitt 34 in Figur 1 dargestellt ist, während der gegenüberliegende Endabschnitt 36 durch den Lagerring 12 verdeckt ist, an einer Oberseite und Unterseite jeweils bearbeitet und abgeflacht sind. Die ursprüngliche zylindrische Form ist an den Seiten des Tragbolzens 30 noch erkennbar. Ebenfalls erkennbar ist die vollzylindrische Form auch am zentralen Teil 32 des Tragbolzens 30, welcher sich innerhalb des Elastomerkörpers 16 im Lagerring 14 befindet und der mit einem kleinen Abschnitt in Figur 1 erkennbar ist. Der Tragbolzen 30 ist mit großer Kraft zusammen mit dem Elastomerkörper 16 in die Lageröffnung 14 des Lagerrings 12 eingepasst. Ein solcher Tragbolzen 30 hat typischerweise eine Länge von ca. 100 cm, wobei die hervorstehenden Abschnitte 34, 36 um ca. 30 cm jeweils hervorstehen. Der vollständige Durchmesser des entsprechenden Zylinders beträgt beispielsweise ca. 25 bis 30 cm.

Die Befestigung des Tragbolzens 30 am Maschinenträger 20, welcher sämtliche Komponenten des Triebstrangs der Windenergieanlage trägt, erfolgt über einen Abstandhalter 22, dessen Oberfläche mit Unterlegklötzen 24 belegt ist, auf welche die abgeflachte Unterseite des hervorstehenden Abschnitts 34 Tragbolzens 30 aufgesetzt ist. Auf die abgeflachte Oberseite des hervorstehenden Abschnitts 34 ist ein Befestigungsklotz 25 aufgesetzt. Diese Teile weisen nicht dargestellte Durchführungsbohrungen bzw. Durchführungsöffnungen für Befestigungsbolzen 29 auf, welche an der dargestellten Oberseite mittels Unterlegscheiben 27, Muttern 28 und gegebenenfalls noch eingesetzten Dehnhülsen 26 fixiert und an der Unterseite am Maschinenträger 20 fixiert sind.

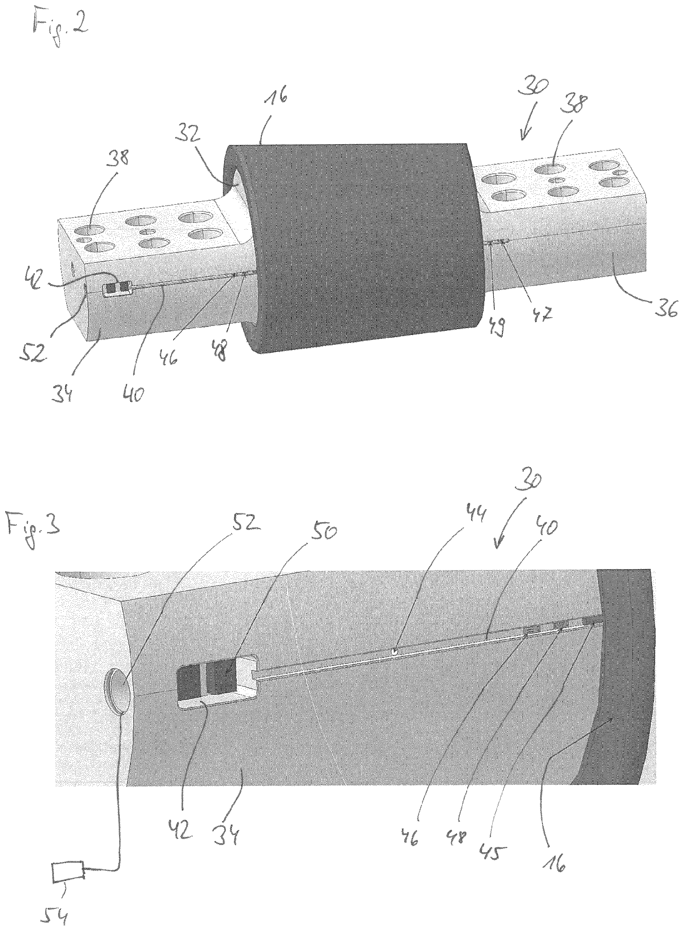

Ein solcher Tragbolzen 30, der in der Figur 1 noch nicht mit Sensoren bestückt ist, wird gemäß der Erfindung mit Sensoren bestückt, die zur Messung von Biegungen und/oder Scherungen des Tragbolzens 30 in Folge von auf den Tragbolzen 30 wirkenden Lasten ausgebildet sind. Fig. 2 ist eine schematische perspektivische Darstellung eines Teils einer erfindungsgemäßen Vorrichtung in einer ersten Ausführungsform, bei der der Tragbolzen 30, mit entsprechenden Sensoren in Form von Dehnungsmessstreifen 46 bis 49 versehen ist. Der zylindrische zentrale Teil 32 des Tragbolzens 30 ist in den Elastomerkörper 16 eingepasst. Die Drehmomentenstütze 10 ist aus Gründen der Übersicht weggelassen. Erkennbar sind in den beiden hervorstehenden Abschnitten 34, 36 die Bohrungen 38 für die in Figur 1 gezeigten Befestigungsbolzen 29 sowie die Vorbereitung der Seitenflächen der hervorstehenden Abschnitte 34, 36 des Tragbolzens 30 für die Aufnahme von Dehnungsmessstreifen 46 bis 49 sowie die Anordnung dieser Dehnungsmessstreifen 46 bis 49. Diese Vorbereitung besteht aus rillenförmigen Vertiefungen 40, die symmetrisch auf der dargestellten Seitenfläche als auch auf der perspektivisch verdeckten gegenüberliegenden Seitenfläche vorhanden sind.

Bevorzugt liegen die rillenförmigen Vertiefungen für die Hauptbelastungen des Bolzens aus Nickmoment und Drehmoment in der Nähe der neutralen Faser, um den Bolzen strukturell nicht unnötig zu schwächen. Für das Giermoment liegen sie damit in der Hauptbelastungsrichtung, dieses ist jedoch geringer als die Kombination von Nick- und Drehmoment und somit für den Bolzen nicht dimensionierend.

Die Tiefe dieser rillenförmigen Vertiefungen 40 ist vorzugsweise zwischen mehreren Millimetern und ca. 3 cm zu wählen, wobei die Dehnungsmessstreifen 46 bis 49 vorzugsweise vollständig in den Vertiefungen 40 versenkt werden können. Die rillenförmigen Vertiefungen 40 erstrecken sich durch den mittleren Abschnitt hindurch.

Ebenfalls erkennbar in Figur 2 ist eine Vertiefung 42 für eine Verstärkereinheit 50, welche in Form von zwei dunklen Bauteilen innerhalb der Vertiefung 42 dargestellt ist. Auch diese Vertiefung 42 ist, ebenso wie die rillenförmige Vertiefung 40, vorzugsweise mittels eines metallischen Deckels verschließbar und somit vor elektromagnetischer Verschmutzung zu sichern. An der Endfläche des hervorstehenden Abschnitts 34 befindet sich eine Versenkung 52 für Stecker oder Kabel zum Anschluss an die Verstärkereinheit 50, die mit der Vertiefung 42 verbunden ist. Eine oder mehrere weitere Bohrungen können den Tragbolzen 30 quer zu seiner Längsrichtung durchsetzen und die dargestellte rillenförmige Vertiefung 40 mit einer entsprechenden rillenförmigen Vertiefung auf der anderen Seite (nicht dargestellt) verbinden, um eine einheitliche Verkabelung zu ermöglichen, die vollständig vor elektromagnetischer Verschmutzung geschützt ist.

In Fig. 3 ist eine Ausschnittsdarstellung aus der Ausführungsform gemäß Figur 2, gezeigt, die gegenüber Figur 2 mehr Detail darstellt. Schematisch ist erkennbar, dass über die Versenkung 52 in der Endfläche des hervorstehenden Abschnitts 34 eine elektrische bzw. elektronische Verbindung zu einer Auswertungseinheit 54 realisiert ist. In der rillenförmigen Vertiefung 40 ist eine Bohrung 44 für eine Kabelführung zur gegenüberliegenden Seite des Tragbolzens 30 dargestellt. In der Nähe des zentralen Teils 32 des Tragbolzens 30, der sich im hohlzylindrischen Elastomerkörper 16 befindet, sind Dehnungsmessstreifen 46, 48 zu erkennen, wobei der Dehnungsmessstreifen 48 näher zu der zentralen Ebene des Tragbolzens 30 angeordnet ist als der Dehnungsmessstreifen 46. Beide Dehnungsmessstreifen 46, 48 befinden sich außerhalb des Elastomerkörpers 16, aber nahe an dem am höchsten belasteten und sich am stärksten biegenden Teil des Tragbolzens 30.

Der Dehnungsmessstreifen 46 ist in Längsrichtung des Tragbolzens 30 und parallel zur Ausrichtung der rillenförmigen Vertiefung 40 ausgerichtet und misst somit Längenänderungen an dieser Stelle aufgrund von Biegungen des Dehnungsmessstreifens. Der Dehnungsmessstreifen 48 weist eine Orientierung um 45° quer zur Längserstreckung des Tragbolzens 30 auf und erkennt Scherungen des Tragbolzens 30. Die in Figur 2 dargestellten Dehnungsmessstreifen 47 und 49 sind wiederum ein längs ausgerichteter Dehnungsmessstreifen 47 an einer zum Dehnungsmessstreifen 46 spiegelsymmetrischen Position zur zentralen Ebene, während der Dehnungsmessstreifen 49 wiederum ein um 45° geneigter Dehnungsmessstreifen ist, der spiegelsymmetrisch zum Dehnungsmessstreifen 48 angeordnet ist und dessen Orientierung ebenfalls spiegelsymmetrisch zu der Orientierung des Dehnungsmessstreifens 48 ist. Die Orientierung des Dehnungsmessstreifens 49 ist somit um 90° gegenüber der Orientierung des Dehnungsmessstreifen 48 gedreht. Auf der nicht dargestellten gegenüberliegenden Seite des Tragbolzens 30 befindet sich eine gleichartige Konstellation von längs- und querorientierten Dehnungsmessstreifen, so dass die jeweils vier gleichartigen Dehnungsmessstreifen zu einer Brückenschaltung im Sinne einer Wheatstone-Brücke verschaltet werden können.

Die in Längsrichtung orientierten Dehnungsmesstreifen 46,47 sind in der gezeigten Einbaulage somit geeignet, eine horizontal wirkende Kraft auf den Bolzen, also eine Kraft, die innerhalb der Ebene durch den Sensor und die Bolzenlängsachse wirkt, zu detektieren. Dies ist in der in Fig. 1 und 2 gezeigten Einbaulage das Giermoment einer Windenergieanlage.

Die unter 45° schräg orientierten Dehnungsmesstreifen 48,49 sind in der gezeigten Einbaulage geeignet, den durch eine senkrecht wirkende Kraft auf den Bolzen, also eine Kraft die senkrecht zu der Ebene durch den Sensor und die Bolzenlängsachse wirkt, zu detektieren. Dies sind in der in Fig. 1 und 2 gezeigten Einbaulage das Nickmoment sowie das Drehmoment einer Windenergieanlage. Zur Unterscheidung, ob es sich um ein Giermoment oder ein Nickmoment handelt, muss auf beiden Seiten des Getriebes der jeweilige Tragbolzen mit Messsensoren bestückt sein.

In Figur 3 ist außerdem ein Edelstahlröhrchen 45 erkennbar, welches in die rillenförmige Vertiefung 40 am Orte des Elastomerkörpers 16 eingelassen ist und ein Eindringen des Elastomerkörpers in die rillenförmige Vertiefung 40 und ein Einquetschen von Kabeln in diesem Abschnitt verhindert. Das Edelstahlröhrchen 45 erlaubt daher ein nachträgliches Verkabeln der Sensoren oder eine Reparatur der Verkabelung.

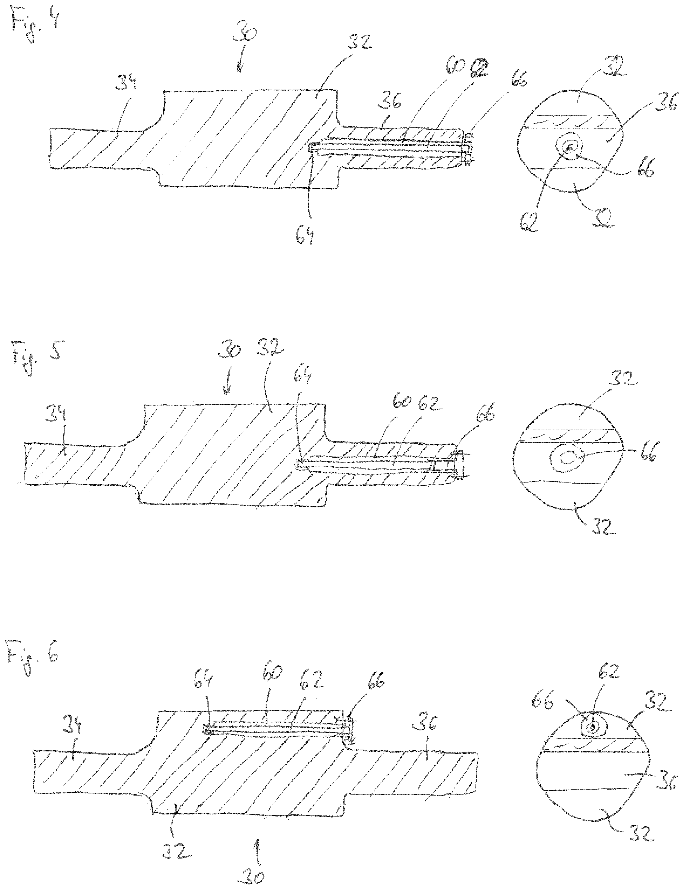

Fig. 4 zeigt eine schematische Darstellung eines Teils einer erfindungsgemäßen Vorrichtung in einer ersten Version einer zweiten Ausführungsform. Auf der linken Seite ist ein Tragbolzen 30, der wie in Figur 1 ausgeführt ist, in Querschnitt dargestellt. Eine Draufsicht auf den Tragbolzen 30 von der Seite des hervorstehenden Abschnitts 36 ist auf der rechten Seite gezeigt.

Anstelle von Dehnungsmessstreifen ist eine Sensoranordnung gezeigt, welche eine Sensorbohrung 60 durch die Längsachse des zylindrischen Tragbolzens 30 aufweist, die bis in den zentralen Teil 32 des Tragbolzens 30 reicht. Das innere Ende der Sensorbohrung 60 weist eine Fixierung 64 für einen Sensorstab 62 auf, welcher in der Fixierung 64 so fixiert ist, dass der Sensorstab 62 im Fall von Verbiegungen des Tragbolzens 30 die Orientierung des Tragbolzens 30 an der Stelle der Fixierung 64 einnimmt. Da der Sensorstab 62 schmaler ist als die Bohrung 60, kann der Sensorstab 62 sich im weiteren Verlauf der Bohrung frei bewegen und erfährt daher an seinem freien Ende eine Auslenkung gegenüber dem unbelasteten Ruhezustand des Tragbolzens 30, welche sich in einer Annäherung an die Innenwand der Sensorbohrung 60 im Bereich des Ausgangs der Sensorbohrung 60 zeigt. Das Maß und die Richtung der Auslenkung indiziert Maß und Richtung der Kraftausübung der Drehmomentenstütze 10 auf den Tragbolzen 30.

Ausgangs der Sensorbohrung 60 ist ein Sensor 66 angeordnet, welcher diese Auslenkung entweder geometrisch erfasst oder in Form einer Auslenkungskraft, welche der Sensorstab auf den Sensor 66 ausübt. Der Sensor 66 kann entweder als Kraftsensor ausgebildet sein, welcher den Sensorstab kontaktiert und dessen Auslegungskraft und Auslenkungsrichtung aufnimmt, oder als Wegsensor, die Wegstrecke und Richtung der Auslenkung kontaktierend oder kontaktlos ermittelt.

Hierzu zeigt Fig. 5 in einer alternativen Form eine schematische Darstellung eines Teils einer erfindungsgemäßen Vorrichtung in einer zweiten Version der zweiten Ausführungsform. Diese unterscheidet sich von der in Figur 4 dargestellten Variante in der Art des Sensors, welcher als Voll-Plugin in die Sensorbohrung 60 eingeschoben ist und den Sensorstab 62 innerhalb der Sensorbohrung 60 kontaktiert. So ist es beispielsweise möglich, den Sensor 60 selber mittels eines Innengewindes an der Innenwand der Sensorbohrung 60 und eines Außengewindes an der äußeren Hülle des Sensors 66 in die Sensorbohrung 60 einzuschrauben und dort derart ortsfest anzubringen.

Fig. 6 zeigt eine schematische Darstellung eines Teils einer erfindungsgemäßen Vorrichtung in einer dritten Version der zweiten Ausführungsform. Die Art des Sensors 66 entspricht wiederum derjenigen aus Figur 4. Im Gegensatz zu den Varianten aus Figur 4 und Figur 5 ist die Messbohrung 60 allerdings nicht im hervorstehenden Teil 36 angeordnet, sondern im zentralen Teil 32 des Tragbolzens 30. Dies hat den Vorteil, dass die gesamte Länge des Sensorstabs 62 im am stärksten sich durchbiegenden Teil des Tragbolzens 30 angeordnet ist und somit eine besonders starke Auslenkung erfährt, was die Messgenauigkeit verbessert. Dies wird erkauft durch eine gegenüber der in Figur 4 und Figur 5 dargestellten Variante verschlechterte Zugänglichkeit der Messanordnung.

Die in Figur 6 dargestellte Messanordnung kann auch mit einem Sensor 66 gemäß Figur 5 ausgestattet sein. In allen Ausführungsbeispielen der Figuren 4, 5 und 6 kann anstelle nur einer Messanordnung mit einer Messbohrung 60 und einem Sensor 66 auch beispielsweise eine symmetrische Anordnung mit zwei Messanordnungen vorgesehen sein, die von beiden Seiten der Drehmomentenstütze 10 in den zentralen Teil 32 hineinreichen.

Die in den Figuren 4 bis 6 gezeigten Sensorstäbe 62 können auch selbst mit Dehnungsmessstreifen ausgestattet sein, die in Längsrichtung und schräg dazu angeordnet sind, um Biegungen und Scherungen des Sensorstabs 62, der dazu an seinen beiden Enden im Tragbolzen 30 lösbar fixiert ist, zu messen und hieraus die verschiedenen auf die Windenergieanlage einwirkenden Momente zu ermitteln. Auch ein solcher mit eigenen Sensoren ausgestatteter Sensorstab 62 ist, beispielsweise während Wartungsarbeiten, einfach und schnell austauschbar, ohne dass die Drehmomentstütze 10 gelöst werden müsste.

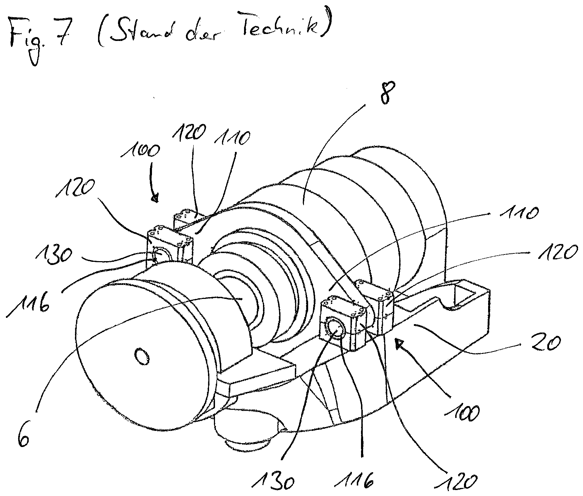

In Figur 7 ist eine alternative, bekannte Form einer Drehmomentenstütze 110 eines Drehmomentenlagers 100 eines von einer Rotorwelle 6 angetriebenen Getriebes 8 einer Windenergieanlage dargestellt, welche sich von der in Figur 1 dargestellten Ausführungsform dadurch unterscheidet, dass in diesem Fall der Tragbolzen 130 ohne Elastomerring direkt in ein Auge (nicht sichtbar) der Drehmomentenstütze 110 eingepresst ist, während in axialer Richtung des Tragbolzens 130 vor und hinter der Drehmomentenstütze 110 Einspannrahmen 120 angeordnet sind, die fest mit dem Maschinenträger 20 verbunden sind. Der Tragbolzen 130 ist mittels hohlzylindrischer Elastomerkörper 116 in den nach oben hin teilbaren Einspannrahmen 120 eingespannt. Eine elastomerbasierte Entkopplung erfolgt in dieser Ausführungsform gegenüber dem Maschinenträger 20. Bei geeigneter Dimensionierung der Elastomerringe ist es auch möglich, Elastomerringe sowohl in den Einspannrahmen 120 als auch im Auge der Drehmomentenstütze 110 zu verwenden.

In dem in Figur 7 gezeigten Ausführungsbeispiel einer Drehmomentenlagerung bietet sich der Einsatz eines Sensorstab 62 gemäß Figur 4 oder Figur 5 besonders an, da die Frontflächen der Tragbolzen 130 zugänglich sind.

Zur Ermittlung von Nickmoment und Drehmoment müssen bevorzugt die beiden links und rechts vom Getriebe 8 dargestellten Tragbolzen 130 mit Sensorik bestückt sein. Andernfalls ist das Drehmoment nur rechnerisch über die Leistung und Drehzahl oder vergleichbare Größen bestimmbar.

Alle genannten Merkmale, auch die den Zeichnungen allein zu entnehmenden sowie auch einzelne Merkmale, die in Kombination mit anderen Merkmalen offenbart sind, werden allein und in Kombination als erfindungswesentlich angesehen. Erfindungsgemäße Ausführungsformen können durch einzelne Merkmale oder eine Kombination mehrerer Merkmale erfüllt sein. Im Rahmen der Erfindung sind Merkmale, die mit "insbesondere" oder "vorzugsweise" gekennzeichnet sind, als fakultative Merkmale zu verstehen.

### Bezuaszeichenliste

- 6: Rotorwelle
- 8: Getriebe
- 10: Drehmomentenstütze
- 12: Lagerring
- 14: Lageröffnung
- 16: hohlzylindrischer Elastomerkörper
- 20: Maschinenträger
- 22: Abstandhalter
- 24: Unterlegklotz
- 25: Befestigungsklotz
- 26: Dehnhülse
- 27: Unterlegscheibe
- 28: Mutter
- 29: Befestigungsbolzen
- 30: Tragbolzen
- 32: zentraler Teil des Tragbolzens
- 34, 36: hervorstehender Abschnitt des Tragbolzens
- 38: Bohrung für Befestigungsbolzen
- 40: rillenförmige Vertiefung
- 42: Vertiefung für Verstärkereinheit
- 44: Bohrung für Kabelführung
- 45: Edelstahlröhrchen
- 46, 47: Dehnungsmessstreifen längserstreckt
- 48, 49: Dehnungsmessstreifen quer
- 50: Verstärkereinheit
- 52: Versenkung für Stecker zum Anschluss an Verstärkereinheit
- 54: Auswertungseinheit
- 60: Sensorbohrung
- 62: Sensorstab
- 64: Fixierung
- 66: Sensor
- 100: Drehmomentenlager
- 110: Drehmomentenstütze
- 116: hohlzylindrischer Elastomerkörper
- 120: Einspannrahmen
- 130: Tragbolzen

## Patentansprüche

1. Vorrichtung zur Messung von Momenten einer Windenergieanlage, umfassend einen Tragbolzen (30, 130), welcher mit einem Maschinenträger (20) eines auf einem Turm angeordneten azimutverstellbaren Maschinenhauses der Windenergieanlage verbunden oder verbindbar ist, wobei eine Drehmomentenstütze (10, 110) eines Getriebes (8) der Windenergieanlage auf dem Tragbolzen (30, 130) lagerbar oder gelagert ist, **dadurch gekennzeichnet, dass** der Tragbolzen (30, 130) mit einem oder mehreren Sensoren (46 - 49; 66) versehen ist, welche zur Detektion von Dehnungen und Scherungen des Tragbolzens (30, 130) ausgebildet und angeordnet sind, wobei eine Signalverarbeitungs- und/oder Auswerteeinheit (54) vorhanden ist, welche mit dem oder den Sensoren (46 - 49; 66) verbunden ist und ausgebildet ist, im Betrieb der Windenergieanlage aus Messsignalen der Sensoren (46 - 49; 66) von Biegungen und/oder Scherungen des Tragbolzens (30, 130) Nickmomente und/oder Giermomente zu ermitteln, die auf die Drehmomentenstütze (10) wirken.

2. Vorrichtung nach Anspruch 1, **dadurch gekennzeichnet, dass** als Sensoren (46 - 49) Dehnungsmessstreifen am Tragbolzen (30, 130) angebracht sind.

3. Vorrichtung nach Anspruch 2, **dadurch gekennzeichnet, dass** ein oder mehrere Dehnungsmessstreifen (46, 48) zur Messung von Biegungen des Tragbolzens (30, 130) in Längsrichtung des Tragbolzens (30, 130) ausgerichtet sind und/oder ein oder mehrere Dehnungsmessstreifen (47, 49) zur Messung von Scherungen des Tragbolzens (30, 130) unter einem Winkel von 30° bis 90°, insbesondere zwischen 40° und 50°, insbesondere 45°, zur Längsrichtung des Tragbolzens (30, 130) ausgerichtet sind.

4. Vorrichtung nach Anspruch 2 oder 3, **dadurch gekennzeichnet, dass** der Tragbolzen (30, 130) durch eine Lageröffnung (14) der Drehmomentenstütze (10, 110) hindurchgeführt ist und mit jeweils einem von zwei Endabschnitten (34, 36) beidseitig aus der Lageröffnung (14) hervorsteht, wobei Dehnungsmessstreifen (46 - 49) symmetrisch zu einer zentralen Ebene der Lageröffnung (14) an den beiden hervorstehenden Endabschnitten (34, 36) angeordnet sind, wobei insbesondere an jedem der beiden Endabschnitte (34, 36) Dehnungsmessstreifen (46 - 49) an zueinander gegenüberliegenden Seiten des jeweiligen Endabschnitts (34, 36) angeordnet sind.

5. Vorrichtung nach Anspruch 3 oder 4, **dadurch gekennzeichnet, dass** jeweils vier in Längserstreckung des Tragbolzens (30, 130) ausgerichtete Dehnungsmessstreifen (46, 48) und/oder jeweils vier unter einem Winkel von 30° bis 90° zur Längsrichtung des Tragbolzens (30, 130) ausgerichtete Dehnungsmessstreifen (47, 49) zu einer Brückenschaltung verschaltet sind.

6. Vorrichtung nach einem der Ansprüche 2 bis 5, **dadurch gekennzeichnet, dass** die Dehnungsmessstreifen (46 - 49) in eine oder mehrere vorgefertigte rillenförmige Vertiefungen (40) versenkt eingelassen sind, wobei die Vertiefung (40) oder Vertiefungen (40) insbesondere mit abnehmbaren, elektromagnetische Verschmutzung abschirmenden, Deckeln abdeckbar oder abgedeckt sind.

7. Vorrichtung nach Anspruch 6, **dadurch gekennzeichnet, dass** Kabelführungen der Sensoren (46 - 49) am Tragbolzen (30, 130) in den Vertiefungen (40) und/oder in Durchführungsbohrungen (60) durch den Tragbolzen (30, 130) verlaufen.

8. Vorrichtung nach Anspruch 6 oder 7, **dadurch gekennzeichnet, dass** in einem zentralen Teil (32) des Tragbolzens (30, 130), der in einem in der Drehmomentenstütze (10, 110) des Getriebes verbauten Zustand nicht zugänglich ist, ein Röhrchen (45) als Kabeldurchführung in der Vertiefung (40) eingesetzt ist.

9. Vorrichtung nach einem der Ansprüche 1 bis 8, **dadurch gekennzeichnet, dass** der Tragbolzen (30, 130) an wenigstens einer Seite eine Sensorbohrung (60) in Längsrichtung des Tragbolzens (30, 130) aufweist, in dessen Inneren ein Sensorstab (62) angeordnet ist, dessen Außendurchmesser kleiner ist als ein Innendurchmesser der Sensorbohrung (60), wobei der Sensorstab (62) in einem Endabschnitt der Sensorbohrung (60), insbesondere lösbar, fixiert ist, wobei am Ausgang der Sensorbohrung (60) ein Sensor (66) angeordnet ist, der ausgebildet ist, Auslenkungen und/oder Auslenkungskräfte des dem fixierten Ende des Sensorstabes (62) gegenüberliegenden Endes des Sensorstabes (62) aufgrund von Verbiegungen und/oder Scherungen des Tragbolzens (30, 130) zu ermitteln.

10. Vorrichtung nach einem der Ansprüche 1 bis 9, **dadurch gekennzeichnet, dass** der Tragbolzen (30, 130) an wenigstens einer Seite eine Sensorbohrung (60) in Längsrichtung des Tragbolzens (30, 130) aufweist, in dessen Inneren ein Sensorstab (62) angeordnet ist, dessen Außendurchmesser kleiner ist als ein Innendurchmesser der Sensorbohrung (60), wobei der Sensorstab (62) in einem Endabschnitt der Sensorbohrung (60) und am Ausgang der Sensorbohrung (60) lösbar fixiert ist, wobei der Sensorstab (62) mit wenigstens einem Sensor, insbesondere einem oder mehreren Dehnungsmessstreifen zur Messung von Biegungen und/oder Scherungen, versehen ist.

11. Windenergieanlage mit einer Vorrichtung nach einem der Ansprüche 1 bis 10 zur Messung von Momenten der Windenergieanlage, wobei die Windenergieanlage ein auf einem Turm angeordnetes azimutverstellbares Maschinenhaus mit einem Rotor mit im Wesentlichen horizontaler Rotorachse sowie einem vom Rotor angetriebenen oder antreibbaren Triebstrang mit einem Getriebe (8) aufweist, welches über eine oder mehrere Drehmomentenstützen (10, 110) auf einem Maschinenträger (20) des Maschinenhauses abgestützt ist.

12. Windenergieanlage nach Anspruch 11, **dadurch gekennzeichnet, dass** das Getriebe an zwei gegenüberliegenden Seiten mittels jeweils einer Drehmomentenstütze (10, 110) auf dem Maschinenträger (20) abgestützt ist, wobei jede der beiden Drehmomentenstützen (10, 110) mit einer Vorrichtung nach einem der Ansprüche 1 bis 10 versehen ist, wobei die beiden Vorrichtungen eine gemeinsame Signalverarbeitungs- und/oder Auswerteeinheit (54) aufweisen.

13. Verfahren zum Betreiben einer Windenergieanlage mit einer Vorrichtung nach einem der Ansprüche 1 bis 10 umfassend einen Tragbolzen (30, 130), welcher mit einem Maschinenträger (20) eines auf einem Turm angeordneten azimutverstellbaren Maschinenhauses der Windenergieanlage verbunden oder verbindbar ist, wobei eine Drehmomentenstütze (10, 110) eines Getriebes (8) der Windenergieanlage auf dem Tragbolzen (30, 130) lagerbar oder gelagert ist, **dadurch gekennzeichnet, dass** mittels des einen oder der mehreren Sensoren (46 - 49; 66) am oder im Tragbolzen (30, 130) Dehnungen und Scherungen des Tragbolzens (30, 130) gemessen werden und mittels der Signalverarbeitungs- und/oder Auswerteeinheit (54), welche mit dem oder den Sensoren (46 - 49; 66) verbunden ist, im Betrieb der Windenergieanlage aus Messsignalen der Sensoren (46 - 49; 66) von Biegungen und/oder Scherungen des Tragbolzens (30, 130) Nick- und/oder Giermomente ermittelt werden, die auf die Drehmomentenstütze (10, 110) wirken.

14. Verfahren nach Anspruch 13, **dadurch gekennzeichnet, dass** die aus den Messsignalen der Sensoren (46 - 49; 66) ermittelten Nickmomente und Giermomente, insbesondere zusätzlich auch Drehmomente, in eine Steuervorrichtung zur Drehmomentenregelung der Windenergieanlage und/oder zur Pitchregelung eingespeist werden, insbesondere für eine Einzelblattverstellung.
